# EUROPEAN PATENT SPECIFICATION

(11) **EP 0 488 205 B1**
(45) Date of publication and mention of the grant of the patent: **16.07.1997**
(21) Application number: 91120262.0
(22) Date of filing: 27.11.1991
(51) Int. Cl.: G02B 6/36, G02B 6/28, G02B 26/00, G02B 6/32

(54) **Multi-port fiberoptic rotary joint**
Faseroptische Drehkupplung mit Mehrfachzugang
Joint tournant à fibre optique à portes multiples

(30) Priority: 28.11.1990 JP 328243/90; 30.11.1990 JP 335540/90; 30.11.1990 JP 337885/90
(43) Date of publication of application: 03.06.1992
(73) Proprietor: HITACHI CABLE, LTD., Chiyoda-ku Tokyo 100 (JP)
(72) Inventor: Fukahori, Toshio, Hitachi-shi, Ibaraki-ken (JP); Takashima, Hideyuki, Hitachi-shi, Ibaraki-ken (JP); Soekawa, Hirokazu, Hitachi-shi, Ibaraki-ken (JP); Sudo, Tetsuo, Hitachi-shi, Ibaraki-ken (JP); Mutoh, Yasuharu, Hitachi-shi, Ibaraki-ken (JP); Kunugiyama, Hiroyuki, Hitachi-shi, Ibaraki-ken (JP); Nakano, Katsunori, Takahagi-shi, Ibaraki-ken (JP); Saitoh, Hiromitsu, Hitachi-shi, Ibaraki-ken (JP)
(74) Representative: Goddar, Heinz J., Dr.

(56) References cited:
- EP-A- 0 215 973
- US-A- 4 872 737
- PATENT ABSTRACTS OF JAPAN vol. 12, no. 359 (P-762)27 September 1988 & JP-A-63 109 405

## Description

### FIELD OF THE INVENTION

The present invention relates to a multi-port fiberoptic rotary joint suitable for light transmission between a rotating member and a fixed member.

### BACKGROUND OF THE INVENTION

For optical communication between a rotating member and a fixed member, a multi-port fiberoptic rotary joint is used to transmit rotating images inputted respectively from a plurality of optical fibers attached to a rotating member to the corresponding optical fibers attached to a fixed member in the form of stationary images, or vice versa.

A conventional multi-port fiberoptic rotary joint is composed of a trapezoid prism provided between a rotating member and a fixed member so as to be rotatable and coaxial with the rotating member, a mechanism for rotating the trapezoid prism coaxially with the rotating member at an angular velocity half that of the rotating member, a plurality of pairs of convergent lenses, the lenses of each pair being attached respectively to the rotating member and the fixed member and optically facing each other across the trapezoid prism, and pairs of input and output optical fibers coupled respectively with the corresponding pairs of conversion lenses on the rotating and stationary sides.

In the optical rotary joint mentioned above, light emerging from the input optical fiber is collimated through one of the convergent lenses parallel to the axial direction of the trapezoid prism to enter into an end surface (the entrance surface) of the trapezoid prism. The light incident to the trapezoid prism parallel to its bottom surface is refracted at the entrance surface, allowed to total reflection at the bottom surface, and refracted again at the other end surface (the exit surface) of the prism so as to propagate in the axial direction, leaving the exit surface of the trapezoid prism. The light emerging from the exit surface of the trapezoid prism is then guided through the other convergent lens to the output optical fiber.

The trapezoid prism is rotated at an angular velocity which is half that of the rotating member, so that a rotating image on the rotator side is altered to a stationary one by the tapezoid prism and transmitted to the fixed member side. Conversely, a stationary image on the fixed member side is altered to a rotating image which rotates at an angular velocity twice that of the rotating trapezoid prism, similar to that of the rotating member, and transmitted to the rotating side. This enables a desirable coupling between the input optical fibers attached to the stationary member and the output optical fibers attached to the rotating member, even if the rotative member rotates.

If a greater number of input and output optical fibers is required for increasing the amount of information transmitted per unit time, the aperture of the trapezoid prism has to be increased. This leads to the increase in length of the prism which is determined relative to the height of aperture depending on the wavelength of light, resulting in the increased loss of light in the rotary joint.

An improved multi-port fiberoptic rotary joint disclosed in U. S. Patent No.4,872,737 comprises a trapezoid prism, a convergent lens located at the region outside the aperture of the trapezoid prism on the entrance side of the trapezoid prism, a reflector deflecting the light incident thereto to the region inside the aperture of the prism, another reflector which guides the light emerging from the exit surface of the trapezoid prism to the region outside the aperture of the prism, and another convergent lens located outside the aperture of the trapezoid prism and coupled with the output optical fiber.

In the multi-port fiberoptic rotary joint referred to above, light emerging from the input optical fiber is collimated through the convergent lens located in the region outside the aperture of the trapezoid prism to enter into the reflector and then deflected by the reflector to the region inside the aperture of the prism so as to enter the entrance surface of the trapezoid prism parallel to its bottom surface of the trapezoid prism (in the axial direction). The light incident to the trapezoid prism parallel to its bottom surface is refracted at the entrance surface, allowed to total reflection at the bottom surface, and refracted again at the exit surface of the prism so as to emerge from the exit surface and propagate in the axial direction of the trapezoid prism. The light emerging from the exit surface of the trapezoid prism is then guided by means of another reflector to another convergent lens located in the region outside the aperture of the prism and thereby transmitted to the output optical fiber through the other convergent lens. Rhomboid prisms or conical mirrors can be used as the reflectors placed on the entrance side and the exit side of the trapezoid prism.

The multi-port fiberoptic rotary joint disclosed in U. S. Patent No.4,872,737 makes it possible to increase the number of optical fibers coupled with the rotary joint exceeding four, because the distance between the adjacent beams, either incident or emerging, is expanded by means of the reflectors so as to secure the space for the light receptacles (containing convergent lenses) connecting the optical fibers to the joint. In the case where a rhomboid prism is used as the reflector, the greater space for, thus the greater number of, the light receptacles is permitted by using a rhomboid prism of greater length. But the increase in length of the rhomboid prism results in an increased loss of light therein.

If a conical mirror is used as the reflector, very precise location of the mirror is required. Even a small error in the location leads to a significant loss of the transmitted light. In addition, scratches or spots on the surface interfere with the reflection so as to increase the loss of light. The use of a rhomboid prism is effective to avoid loss of light due to the location error, but fails to be quite free from the loss due to scratches or spots on its surface.

### SUMMARY OF THE INVENTION

Accordingly, a first object of the invention is to provide an improved multi-port fiberoptic rotary joint which is capable of transmitting increased amount of information between a rotating member and a fixed member through increased number of light beams without increase in loss of light.

The invention is a multi-port fiberoptic rotary joint as defined in claim 1.

The multiple reflectors of the invention may be one or two pairs of mirrors or a rhomboid prism capable of deflecting a light beam twice perpendicularly to produce a light beam parallel to the incident beam. A pair of rhomboid prisms are preferable as the reflectors used in combination with a trapezoid prism.

It is preferred in order to avoid the increase in size of the rotary joint that the mechanism for rotating a trapezoid prism, a pair of cylindrical lenses or a slab lens at an angular velocity half that of the rotating member around the optical axis comprises a driving gear attached to the rotating member a first and a second coaxial intermediate gears fixed to each other and a final gear attached to the prism or the lens or lenses, wherein the gear ratio of the first intermediate gear to the driving gear is 1 to m/2 and that of the final gear to the second intermediate gear is m to 1, m being a positive integer greater than 2, for example, 3 or 4.

### BRIEF DESCRIPTION OF THE DRAWINGS

The present invention will be explained in more detail in accordance with the following drawings, wherein;
Fig.1A shows a cross-sectional view of a conventional multi-port fiberoptic rotary joint,
Fig.1B shows an explanatory view of the light transmission in a conventional multi-port fiberoptic rotary joint,
Fig.1C shows a cross-sectional view of a connector used for a multi-port fiberoptic rotary joint,
Fig.2 shows a cross-sectional view of another conventional multi-port fiberoptic rotary joint,
Fig.3 is a graph showing the change in the loss of light in dB with the distance between the convergent lenses in a multi-port fiberoptic rotary joint,
Fig.4 shows an elevational view of a conventional multi-port fiberoptic rotary joint seen from the stationary side,
Fig.5A shows a cross-sectional view of a multi-port fiberoptic rotary joint in a preferred embodiment of the invention,
Fig.5B shows an explanatory view of the optical portion in a multi-port fiberoptic rotary joint in a preferred embodiment of the invention,
Fig.5C shows a partial elevational view of a multi-port fiberoptic rotary joint in a preferred embodiment of the invention, seen from the stationary side,
Fig.6A shows a cross-sectional view along the plane VI-VI in Fig.5A, and
Fig.6B shows a cross-sectional view along the plane B-B in Fig.6A.

### DESCRIPTION OF THE PREFERRED EMBODIMENTS

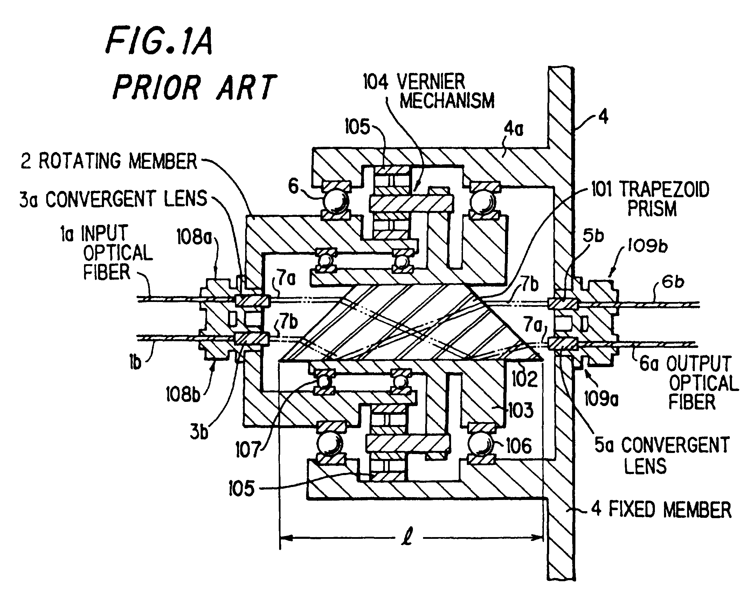

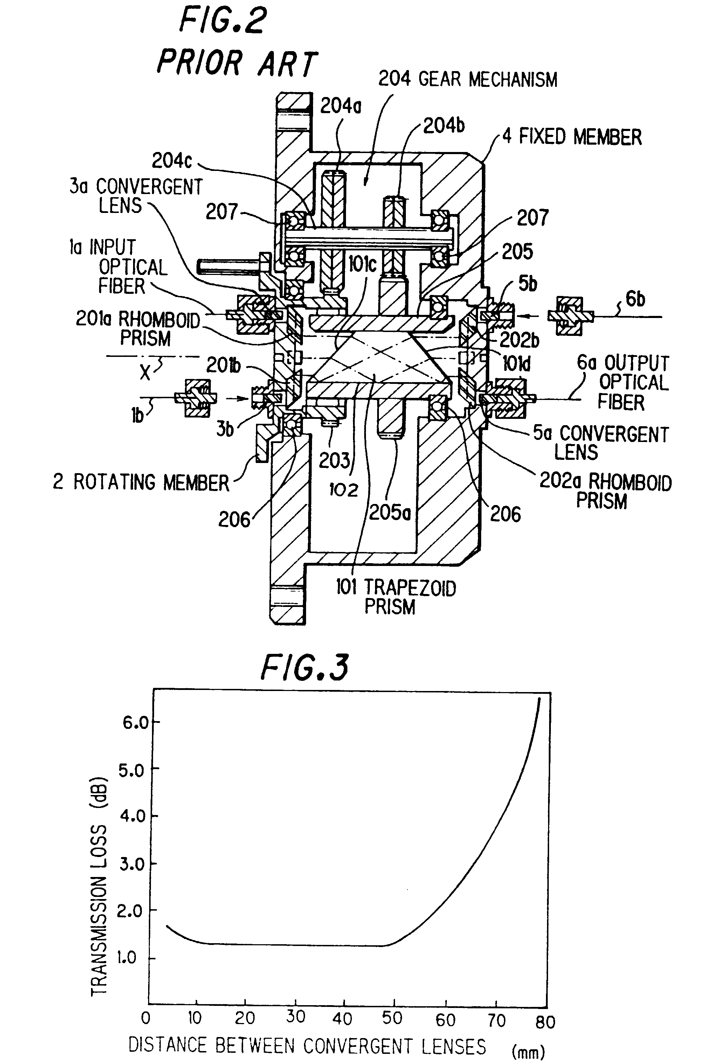

Before explaining multi-port fiberoptic rotary joints in preferred embodiments of the invention, the aforementioned conventional fiberoptic rotary joints will be explained with reference to Figs.1A to 1C and Fig.2.

A conventional multi-port fiberoptic rotary joint illustrated in Fig.1A is composed of a trapezoid prism 101 provided between a rotating member 2 and a fixed member 4 so as to be rotatable coaxially with the rotating member 2, a vernier mechanism 104 for rotating the trapezoid prism 101 fixed on a prism holder 103 at an angular velocity half that of the rotating member 2 coaxially with the rotating member 2, a pair of convergent lenses 3a and 5a, another pair of convergent lenses 3b and 5b, convergent lenses 3a and 3b being coupled optically with input optical fibers 1a and 1b respectively, on the rotating side of the joint, and convergent lenses 5a and 5b being coupled optically with output optical fibers 6a and 6b, on the stationary side of the joint. The pair of lenses, either 3a and 5a or 3b and 5b, are optically facing each other across the trapezoid prism 101. The convergent lenses 3a and 3b are attached to the rotating member 2, while the lenses 5a and 5b are attached to the fixed member 4. The trapezoid prism 101 is provided with a bottom surface 102 which functions as a total reflective surface. The vernier mechanism 104 consisits of a satellite rollers 105 interposed between the rotating member 2 and the fixed member 4.

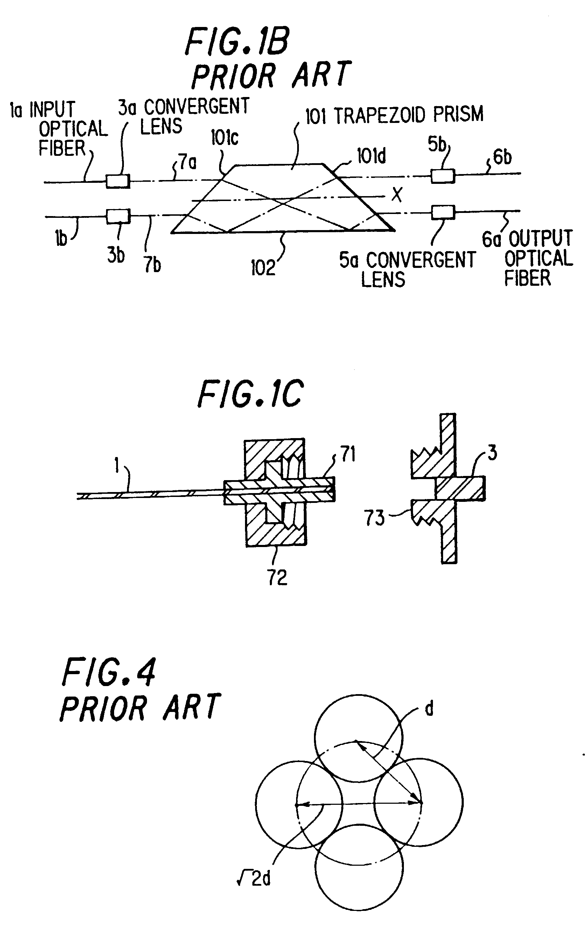

The light transmission in the optical rotary joint mentioned above will be understood with reference to Fig.1B. Light beams 7a and 7b emerging from the input optical fibers 1a and 1b, respectively, are collimated through the convergent lenses 3a and 3b parallel to the axial direction of the trapezoid prism 101 (i.e., parallel to the bottom surface 102 of the prism) to enter the entrance surface 101c of the prism. The light incident to the trapezoid prism 101 parallel to its bottom surface 102 is refracted at the entrance surface 101c, allowed to total reflection at the bottom surface 102, refracted again at the exit surface 101d of the prism so as to propagate in the axial direction, leaving the exit surface 101d of the trapezoid prism 101. The light emerging from the exit surface 101d of the trapezoid prism 101 is then guided through each of the convergent lenses 5a and 5b to the output optical fibers 6a and 6b, respectively.

The trapezoid prism 101 is rotated by means of the vernier mechanism 104 at an angular velocity which is half that of the rotating member 2, so that a rotating image on the rotator side is altered to a stationary one by the trapezoid prism 101 and transmitted to the stationary side. This enables a desirable coupling between the input optical fibers la and 1b attached to the rotating member 2 and the output optical fibers 6a and 6b attached to the stationary member 4, even if the rotative member 2 rotates. Conversely, if the light beams 7a and 7b emerging from the optical fibers 6a and 6b, respectively, enter the trapezoid prism 101 parallel to the axial direction of the prism, the stationary image on the fixed member 4 carried by light beams transmitted by the optical fibers 6a and 6b is altered to a rotating image which rotates at the angular velocity twice that of the rotating trapezoid prism 101, similar to that of the rotating member 2, and transmitted to the optical fibers 1a and 1b on the rotator side. This enables a desirable coupling between the "input" optical fibers 6a and 6b attached to the stationary member 4 and the "output" optical fibers 1a and 1b attached to the rotating member 2, if the rotative member 2 rotates at the angular velocity twice that of the rotating trapezoid prism 101.

An optical fiber, such as 1a, is connected to a convergent lens in a rotary joint generally by means of a connector, as shown in Fig.1C, comprising a plug 72 and a receptacle 73. A terminal of an optical fiber 1 is attached to the plug 72 through a ferrule 71 and a convergent lens 3 is attached to the receptacle 73.

For increasing the amount of information transmitted per unit time through the rotary joint, the greater number of input and output optical fibers, thus the increased number of convergent lenses, is required.

The minimum distance between the optical fibers, being usually 10 to 15 mm, depends on the area occupied by a connector to connect an optical fiber to a convergent lens, usually 6 to 10 mm in diameter and, in addition, the least gap between the connectors required for connecting operation. Thus, the greater aperture of a trapezoid prism is required in order to accomodate an increased number of optical fibers. As mentioned before the increase in aperture of the trapezoid prism leads to the increase in length of the prism because the latter is determined relative to the height of aperture depending on the wavelength of light, resulting further in the increased loss of light in the rotary joint. The change in the loss of light in dB with the distance between the convergent lenses 3a and 5a or 3b and 5b including the intervening trapezoid prism 101 is shown in Fig.3. The distance between the pair of convergent lenses exceeding 50 mm results in a significant increase in the loss of light, mainly because of increased length of the prism.

A multi-port fiberoptic rotary joint disclosed in U. S. Patent No.4,872,737 is illustrated in Fig.2. The multi-port fiberoptic rotary joint in Fig.2 is furnished with a trapezoid prism 101, a gear mechanism 204 for rotating the prism, convergent lenses 3a and 3b located in the region outside the aperture of the trapezoid prism 101, rhomboid prisms 201a and 201b deflecting the light incident thereto to the region inside the aperture of the trapezoid prism 101 in front of the entrance surface 101c of the prism, rhomboid prisms 202a and 202b which guide the light emerging from the exit surface 101d of the trapezoid prism 101 to the region outside the aperture of the trapezoid prism 101, and convergent lenses 5a and 5b located outside the aperture of the trapezoid prism 101 and coupled with the output optical fibers 6a and 6b. The pair of rhomboid prisms, either 201a and 202a or 201b and 202b, are facing each other across the trapezoid prism 101. Either the pair of convergent lenses 3a and 5a or the pair of convergent lenses 3b and 5b are facing each other across the trapezoid prism 101, with their optical axes parallel to the optical axis, or the bottom surface 102, of the trapezoid prism 101.

In operation of the multi-port fiberoptic rotary joint shown in Fig.2, light beams 7a and 7b emerging from the input optical fibers 1a and 1b, respectively, are collimated through the convergent lenses 3a and 3b located in the region outside the aperture of the trapezoid prism 101 and deflected by the rhomboid prisms 201a and 201b to the region inside the aperture of the trapezoid prism 101, so as to enter the entrance surface 101c of the trapezoid prism 101 parallel to its bottom surface 102 (i.e., in the axial direction X). The light incident to the trapezoid prism 101 parallel to its bottom surface 102 is refracted at the entrance surface 101c, allowed to total reflection at the bottom surface 102, and refracted again at the exit surface 101d of the prism, so as to emerge from the exit surface 101d and propagate in the axial direction X of the trapezoid prism 101. The light emerging from the exit surface 101d of the trapezoid prism 101 is then guided by means of the rhomboid prism, either 202a or 202b, to the convergent lens 5a or 5b located in the region outside the aperture of the trapezoid prism 101 and thereby transmitted to the output optical fiber 6a or 6b.

The gear mechanism 204 for rotating the trapezoid prism 101 is a mechanism for reducing the rotating speed. The gear mechanism 204 essentially consists of a gear 203 provided around the rotating member 2, a gear 204a attached onto a shaft 204c supported rotatably by bearings 207 inside the fixed member 4, being engaged with the gear 203, a gear 204b provided on the shaft 204, and a gear 205a formed on the outer surface of the prism holder 205 and engaged with the gear 204b. The diameters of the gears 203, 204a, 204b and 205a are selected so that the prism holder 205 is rotated at an angular velocity half that of the rotating member 2.

When the rotating member 2 is rotated at an angular velocity ω, the prism holder 205 and the trapezoid prism 101 fixed thereto are driven for rotation in the same direction of rotation at an angular velocity of (1/2)ω by means of the mechanism 204.

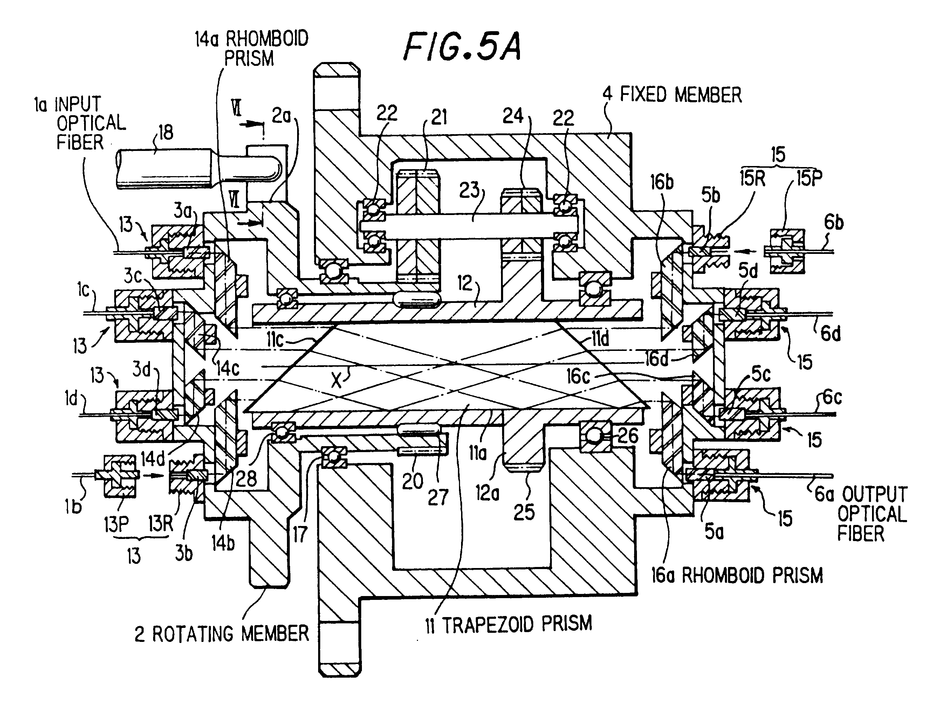

In the multi-port fiberoptic rotary joint ofthe structure disclosed in U. S. Patent No.4,872,737, the number of port permitted without significant loss of transmitted light is at most 8, even if the length of rhomboid prisms is increased to enlarge the aperture in order to accomodate greater number of ports at their ends. In fact, a rotary joint having at most four ports is disclosed. As illustrated in Fig.4, if four ports of diameter d are to be accomodated, the distance from the optical axis of the trapezoid prism required is at least the product (square root of 2) times d.

Moreover, the mechanism 204 is relatively large in its size, because the intermediate gears 203 and 204a of equal diameter are used for rotating the trapezoid prism 101 connected to the gear mechanism at the desired angular velocity (1/2)ω.

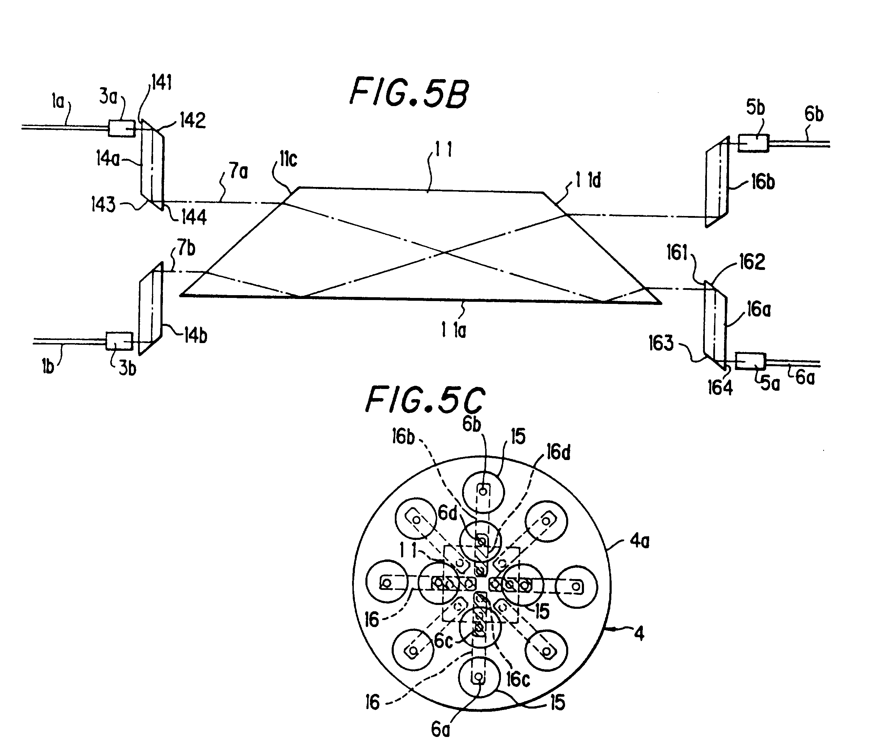

A detailed description will now be given of a multi-port fiberoptic rotary joint in a preferred embodiment according to the present invention with reference to Figs.5A and 5B. The multi-port fiberoptic rotary joint comprises a trapezoid prism 11, a mechanism including gears 20, 21, 24 and 25 for rotating the prism at the desired angular velocity, convergent lenses 3a, 3b, 3c and 3d coupled with the input optical fibers 1a, 1b, 1c and 1d, respectively, and located in the region outside the aperture of the trapezoid prism 11 in front of the entrance surface 11c of the prism, rhomboid prisms 14a, 14b, 14c and 14d deflecting the light incident thereto to the region inside the aperture of the trapezoid prism 11, rhomboid prisms 16a, 16b, 16c and 16d which guide the light emerging from the exit surface 11d of the trapezoid prism 11 to the region outside the aperture of the trapezoid prism 11, and convergent lenses 5a, 5b, 5c and 5d located outside the aperture of the trapezoid prism 11 and coupled respectively with the output optical fibers 6a, 6b, 6c and 6d. Either pair of the rhomboid prisms, 14 and 16 or 14b and 16b, are facing each other across the trapezoid prism 11. Either pair of rhomboid prisms, 14c and 16c or 14d and 16d, also are facing each other across the trapezoid prism 11. Either pair of convergent lenses, 3a and 5a, 3b and 5b, 3c and 5c or 3d and 5d, are facing each other across the trapezoid prism 11, with their optical axes parallel to the optical axis, or the bottom surface 11a, of the trapezoid prism 11.

The optical portion in the multi-port fiberoptic rotary joint is illustrated separately in Fig.5B. The light beams 7a and 7b emerging respectively from the input optical fibers 1a and 1b are collimated respectively through the convergent lenses 3a and 3b located in the region outside the aperture of the trapezoid prism 11 and deflected by the rhomboid prisms 14a and 14b to the region inside the aperture of the trapezoid prism 11, so as to enter the entrance surface 11c of the trapezoid prism 11 parallel to its bottom surface 11a (i.e., parallel to the optical axis of the trapezoid prism 11). The light incident to the trapezoid prism 11 parallel to its bottom surface 11a is refracted at the entrance surface 11c, allowed to total reflection at the bottom surface 11a, and refracted again at the exit surface 11d of the trapezoid prism 11, so as to emerge from this surface and propagate in the axial direction of the trapezoid prism 11. The light emerging from the exit surface 11d of the trapezoid prism 11 is then guided by means of the rhomboid prism either 16a or 16b to the convergent lens 5a or 5b located in the region outside the aperture of the trapezoid prism 11 and thereby transmitted to the output optical fiber 6a or 6b.

The mechanism for rotating the trapezoid prism 11 is a gear mechanism for reducing the rotating speed, as shown in Fig.5A. The mechanism essentially consists of a gear 20 provided around the rotating member 2, a gear 21 attached onto a shaft 23 supported rotatably by bearings 22, 22 inside the fixed member 4, being engaged with the gear 20, a gear 24 attached to the shaft 23, and a gear 25 formed on the outer surface of the prism holder 12 and engaged with the gear 24. The rotating member 2 and the prism holder 12 are supported rotatably by the fixed member through bearings 17 and 26, respectively. The prism holder 12 is further supported inside the cylindrical portion of the rotating member 2 rotatably by bearings 27 and 28.

When the rotating member 2 is rotated at an angular velocity ω, the prism holder 12 and the trapezoid prism 11 fixed thereto are driven for rotation in the same direction of rotation at an angular velocity of (1/2)ω by means of the mechanism above.

Fig.5C shows an end on the stationary side of the rotary joint in Fig.5A, showing the optical elements only. Eight longer rhomboid prisms such as the prisms 16a and 16b are located with their outer ends being located remote from the center of the fixed member 4, while four shorter rhomboid prisms such as the prisms 16c and 16d are located with their outer ends being located nearer to the center than the prisms 16a and 16b. Each of convergent lenses 15 occupies such a space that only four of them are permitted around the center at the outer ends of shorter rhomboid prisms 16c, 16d and so on, but eight convergent lenses 15 are permitted around the center at the outer ends of longer rhomboid prisms 16a, 16b and so on. After all, twelve convergent lenses 15 respectively coupled with optical fibers 6 are permitted within the circle 4a surrounding the,terminal surface of the fixed member 4.

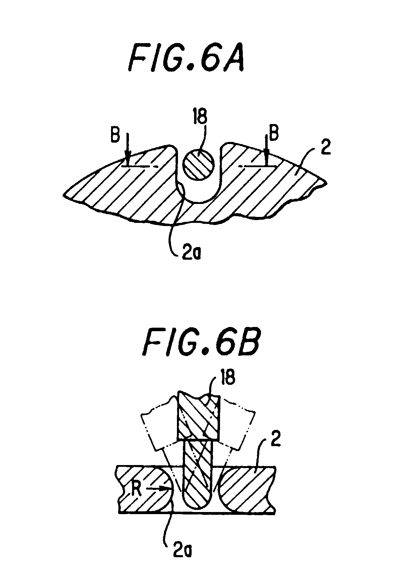

Driving member 18 is engaged with an indentation 2a formed on the rotating member 2. The driving of the rotating member 2 will be understood with reference to Figs.6A and 6B. Fig.6A shows the cross-section along the plane VI-VI in Fig. 5A, and Fig. 6B shows the cross-section along the plane B-B in Fig. 6A. As shown in Fig. 6A, the driving member 18 is a round rod, and a clearance is provided between the driving member 18 and the identation 2a which is arc-shaped, as shown in Fig. 6A.

Allthough the invention has been described with respect to a specific embodiment for complete and clear disclosure, the appended claims are not to be thus limited but are to be construde as bodying all modifications and alternative constructions that may occur to one skilled in the art which fairly fall within the scope of the claims.

## Claims

1. A multi-port fiber optic rotary joint, comprising:
- a trapezoid prism (11) arranged between a rotating member (2) and a fixed member (4) so as to be rotatable about its optical axis which is coaxial with the axis of rotation of the rotating member (2);
- a mechanism (20, 21, 24, 25) arranged to rotate said trapezoid prism (11) at an angular velocity half that of said rotating member (2);
- a plurality of pairs of convergent lenses (3a, 5a; 3b, 5b; 3c, 5c; 3d, 5d), the lenses of each pair being attached respectively to said rotating member (2) and said fixed member (4) and located outside the aperture of said trapezoid prim (11) and respectively facing an end face of said trapezoid prims (11);
- a plurality of pairs of multiple reflectors (14a, 16a; 14b, 16b; 14c, 16c; 14d, 16d), one multiple reflector (14a, 14b, 14c, 14d) of each pair being located so as to deflect the light incident thereon after passage through one (3a, 3b, 3c, 3d) of said pair of convergent lenses to the region inside the aperture of said trapezoid prims (11) and then to direct the light to said trapezoid prism (11) along a path parallel to the flat bottom surface (11a) thereof, toward one of the end surfaces (11c, 11d) thereof, the other multiple reflector (16a, 16b, 16c, 16d) of each pair being located so as to deflect the light emerging from the other end surface of said trapezoid prism (11) to outside the aperture of said trapezoid prism (11) and to direct it to the other member (5a, 5b, 5c, 5d) of said pair of convergent lenses; and
- pairs of input and output optical fibers (1a, 6; 1b, 6b; 1c, 6c; 1d, 6d) optically coupled respectively with the pairs of said convergent lenses (3a, 5a; 3b, 5b; 3c, 5c; 3d, 5d) on the rotating and stationary members;
characterized in that said plurality of pairs of convergent lenses are in the form of
a plurality of sets of lenses located adjacent each end face of the trapezoid prism (11) with the lenses of each set on each side being located on a circle (4a) of diameter different from the circle(s) of the other set(s) on that side, wherein the centres of said circles are concentric and lie on the axis of rotation; and
said pairs of multiple reflectors (14a, 16a; 14b, 16b; 14c, 16c; 14d, 16d) are located respectively so as to direct the light incident thereto after passing through one member (3a, 3b, 3c, 3d) of each pair of said convergent lenses located on said circles on the rotating side, to inside the aperture of said trapezoid prism (11) thereby to enter into the prism through an end surface (11c) thereof, and so as to deflect the light emerging from the other end surface (11d) of said trapezoid prism (11) so that it is directed to the other member (5a, 5b, 5c, 5d) of said pair of convergent lenses located on said circles on the stationary side.

2. A multi-port fiber optic rotary joint as defined in claim 1, wherein:
said reflector is a rhomboid prism (14a, 14b, 14c, 14d; 16a, 16b, 16c, 16d) deflecting an incident light beam twice perpendicularly to produce a light beam parallel to said incident light beam.

3. A multi-port fiber optic rotary joint as defined in claim 1, wherein:
said pairs of multiple reflectors comprise a pair of rhomboid prisms (14a, 16a; 14b, 16b; 14c, 16c; 14d, 16d).

4. A multi-port fiber optic rotary joint as defined in claim 1, wherein:
said pairs of multiple reflectors are pairs of rhomboid prisms ((14a, 16a; 14b, 16b; 14c, 16c; 14d, 16d).

## Patentansprüche

1. Faseroptische Drehkupplung mit Mehrfachzugang mit:
- einem Trapezoid-Prisma (11), welches zwischen einem rotierenden Teil (2) und einem festen Teil (4) so angeordnet ist, daß es um seine optische Achse drehbar ist, welche koaxial mit der Rotationsachse des rotierenden Teiles (2) verläuft;
- einem Mechanismus (20, (20, 21, 24, 25), welcher so angeordnet ist, daß er das Trapezoid-Prisma (11) mit einer Winkelgeschwindigkeit dreht, die halb so groß ist wie die des rotierenden Teiles (2);
- einer Vielzahl konvergenter Linsenpaare (3a, 5a; 3b, 5b; 3c, 5c; 3d, 5d), wobei die Linsen eines jeden Paares jeweils an dem rotierenden Teil (2) und dem festen Teil (4) angebracht sind und sich außerhalb der Apertur des Trapezoid-Prismas (11) befinden und jeweils einer Endfläche des Trapezoid-Prismas (11) zugewandt sind;
- einer Vielzahl von Vielfachreflektorpaaren (14a, 16a; 14b, 16b; 14c, 16c; 14d, 16d), wobei ein Vielfachreflektor (14a, 14b, 14c, 14d) eines jeden Paares so angeordnet ist, um das auf diesen einfallende Licht nach Durchgang durch eines (3a, 3b, 3c, 3d) der konvergenten Linsenpaare auf den Bereich innerhalb der Apertur des Trapezoid-Prismas (11) abzulenken und um dann das Licht auf das Trapezoid-Prisma (11) entlang eines Pfades parallel zu seiner flachen Unterseite (11a) gegen eine seiner Endflächen (11c, 11d) zu richten, wobei der andere Vielfachreflektor (16a, 16b, 16c, 16d) eines jeden Paares so angeordnet ist, um das Licht, welches aus der anderen Endfläche des Trapezoid-Prismas (11) austritt, in den Außenbereich der Apertur des Trapezoid-Prismas (11) abzulenken und es auf den anderen Teil (5a, 5b, 5c, 5d) des konvergenten Linsenpaares zu richten; und
- Paaren einleitender und ausleitender optischer Fasern (1a, 6; 1b, 6b; 1c, 6c; 1d, 6d), welche jeweils optisch mit den konvergenten Linsenpaaren (3a, 5a; 3b, 5b; 3c, 5c; 3d, 5d) auf den rotierenden und stationären Teilen gekoppelt sind;
dadurch gekennzeichnet, daß die Vielzahl der konvergenten Linsenpaare in der Gestalt vorliegen, daß eine Vielzahl von Linsengruppen sich in der Nähe jeder Endfläche des Trapezoid-Prismas (11) befindet, wobei sich die Linsen jeder Gruppe auf jeder Seite auf einem Kreis (4a) befinden, im Durchmesser verschieden von dem/den Kreis(en) der anderen Gruppe(n) auf dieser Seite, wobei die Mittelpunkte der Kreise konzentrisch sind und auf der Rotationsachse liegen; und
die Vielfachreflektorpaare (14a, 16a; 14b, 16b; 14c, 16c; 14d, 16d) jeweils so angeordnet sind, daß sie das darauf einfallende Licht nach Durchgang durch einen Teil (3a, 3b, 3c, 3d) eines jeden der konvergenten Linsenpaare, die auf den Kreisen auf der rotierenden Seite angeordnet sind, in das Innere der Apertur des Trapezoid-Prismas (11) richten, so daß es durch eine seiner Endflächen (11c) in das Prisma eintritt, und um das Licht, welches aus der anderen Endfläche (11d) des Trapezoid-Prismas (11) austritt, abzulenken, so daß es auf den anderen Teil (5a, 5b, 5c, 5d) des konvergenten Linsenpaares, welches auf den Kreisen auf der stationären Seite angeordnet ist, gerichtet wird.

2. Faseroptische Drehkupplung mit Mehrfachzugang nach Anspruch 1, wobei:
der Reflektor ein Rhomboid-Prisma (14a, 14b, 14c, 14d; 16a, 16b, 16c, 16d) ist, welches einen einfallenden Strahl zweimal senkrecht ablenkt, um so einen Lichtstrahl zu erzeugen, welcher parallel zu dem einfallenden Lichtstrahl ist.

3. Faseroptische Drehkupplung mit Mehrfachzugang nach Anspruch 1, wobei:
die Vielfachreflektorpaare ein Paar Rhomboid-Prismen (14a, 16a; 14b, 16b; 14c, 16c; 14d, 16d) aufweisen.

4. Faseroptische Drehkupplung mit Mehrfachzugang nach Anspruch 1, wobei:
die Vielfachreflektorpaare Rhomboid-Prismenpaare (14a, 16a; 14b, 16b; 14c, 16c; 14d, 16d) sind.

## Revendications

1. Joint tournant à fibres optiques à accès multiples, comprenant :
- un prisme trapézoïdal (11) disposé entre un organe rotatif (2) et un organe fixe (4), de manière à pouvoir tourner autour de son axe optique qui est coaxial à l'axe de rotation de l'organe rotatif (2);
- un mécanisme (20, 21, 24, 25) agencé pour mettre en rotation ledit prisme trapézoïdal (11) à la moitié de la vitesse angulaire dudit organe rotatif (2);
- une pluralité de paires de lentilles convergentes (3a, 5a; 3b, 5b; 3c, 5c; 3d, 5d), les lentilles de chaque paire étant respectivement fixées audit organe rotatif (2) et audit organe fixe (4) et placées à l'extérieur de l'ouverture dudit prisme trapézoïdal (11) et respectivement tournées vers une face d'extrémité dudit prisme trapézoïdal (11);
- une pluralité de paires de réflecteurs multiples (14a, 16a; 14b, 16b; 14c, 16c; 14d, 16d), l'un des réflecteurs multiples (14a, 14b, 14c, 14d) de chaque paire étant disposé de manière à dévier la lumière incidente sur lui après qu'elle ait traversé l'une (3a, 3b, 3c, 3d) de ladite paire de lentilles convergentes dans la zone se trouvant à l'intérieur de l'ouverture dudit prisme trapézoïdal (11), pour alors diriger la lumière vers le prisme trapézoïdal (11), le long d'un chemin parallèle à sa surface de fond plane (11a), en direction de l'une de ses surfaces d'extrémité (11c, 11d), l'autre réflecteur multiple (16a, 16b, 16c, 16d) de chaque paire étant agencé de manière à dévier la lumière provenant de l'autre surface d'extrémité dudit prisme trapézoïdal (11) vers l'extérieur de l'ouverture dudit prisme trapézoïdal (11) et à la diriger vers l'autre organe (5a, 5b, 5c, 5d) de ladite paire de lentilles convergentes; et
- des paires de fibres optiques (1a, 6a; 1b, 6b; 1c, 6c; 1d, 6d) étant optiquement couplées respectivement avec les paires desdites lentilles convergentes (3a, 5a; 3b, 5b; 3c, 5c; 3d, 5d) sur les organes rotatif et stationnaire;
caractérisé par le fait que ladite pluralité de paires de lentilles convergentes se présentent sous la forme d'une pluralité de jeux de lentilles disposés adjacentes à chaque face d'extrémité du prisme trapézoïdal (11) avec les lentilles de chaque jeu sur chaque face disposées sur un cercle (4a) d'un diamètre différent du/des cercle(s) de/des autre(s) jeu(x) sur cette face, les centres desdits cercles étant concentriques et se trouvant sur l'axe de rotation; et
lesdites paires de réflecteurs multiples (14a, 16a; 14b, 16b; 14c, 16c; 14d, 16d) sont disposées respectivement de manière à diriger sur eux* la lumière incidente après qu'elle ait traversé un organe (3a, 3b, 3c, 3d) de chaque paire desdites lentilles convergentes se trouvant sur lesdits cercles sur la face de rotation, vers l'intérieur de l'ouverture dudit prisme trapézoïdal (11) pour entrer de ce fait à l'intérieur du prisme en passant à travers unesurface d'extrémité (11c), et de manière à dévier la lumière provenant de l'autre surface d'extrémité de surface (11d) dudit prisme trapézoïdal (11) afin qu'elle soit dirigée vers l'autre organe (5a, 5b, 5c, 5d) de ladite paire de lentilles convergentes se trouvant sur lesdits cercles de la face stationnaire.

2. Joint tournant à fibres optiques à accès multiples selon la revendication 1, dans lequel :
ledit réflecteur est un prisme rhomboïde (14a, 14b, 14c, 14d; 16a, 16b, 16c, 16d) déviant deux fois un rayon de lumière incidente perpendiculairement, pour produire un rayon lumineux parallèlement audit rayon de lumière incidente.

3. Joint tournant à fibres optiques à accès multiples selon la revendication 1, dans lequel :
lesdites paires de réflecteurs multiples comprennent une paire de prismes rhomboïdes (14a, 14b, 14c, 14d; 16a, 16b, 16c, 16d).

4. Joint tournant à fibres optiques à accès multiples selon la revendication 1, dans lequel :
lesdites paires de réflecteurs multiples sont des paires de prismes rhomboïdes (14a, 14b, 14c, 14d;16a, 16b, 16c, 16d).
